(19) Europäisches Patentamt
European Patent Office
Office européen des brevets

(11) EP 1 832 628 A1

(12) EUROPEAN PATENT APPLICATION
published in accordance with Art. 158(3) EPC

(43) Date of publication:
12.09.2007 Bulletin 2007/37

(21) Application number: 05822447.8

(22) Date of filing: 27.12.2005

(51) Int Cl.:
C09B 31/18 (2006.01) G02B 5/30 (2006.01)
C09K 19/60 (2006.01)

(86) International application number:
PCT/JP2005/023932

(87) International publication number:
WO 2006/070818 (06.07.2006 Gazette 2006/27)

(84) Designated Contracting States:
DE

(30) Priority: 27.12.2004 JP 2004376880
07.12.2005 JP 2005352910

(71) Applicant: Mitsubishi Chemical Corporation
Minato-ku
Tokyo 108-0014 (JP)

(72) Inventors:
- SANO, Hideo
Mitsubishi Chem. Group Science & Tech.
Aoba-ku,
Yokohama-shi, Kanagawa 2278502 (JP)
- KADOWAKI, Masami
Mitsubishi Chemical Group Science
Aoba-ku, Yokohama-shi, Kanagawa 2278502 (JP)
- HASEGAWA, Ryuichi
Mitsubishi Chem. Group Science &
Aoba-ku, Yokohama-shi, Kanagawa 2278502 (JP)
- YONEYAMA, Tomio,
Mitsubishi Chem. Group Science &
Aoba-ku, Yokohama-shi, Kanagawa 2278502 (JP)

(74) Representative: Merkle, Gebhard
TER MEER STEINMEISTER & PARTNER GbR,
Patentanwälte,
Mauerkircherstrasse 45
81679 München (DE)

(54) **TRISAZO DYE, COMPOSITION CONTAINING THE SAME FOR ANISOTROPIC DYE FILM, ANISOTROPIC DYE FILM, AND POLARIZING ELEMENT**

(57) To provide a dye for an anisotropic dye film to be formed by a wet system film-forming method, which is black and which has a high degree of polarization and a high degree of molecular orientation, an anisotropic dye film using the dye, and the like.

A trisazo dye for an anisotropic dye film to be formed by a wet system film-forming method, of which the free acid form is represented by the following formula (1), a dye composition for an anisotropic dye film containing the dye, an anisotropic dye film, and a polarizing element using the anisotropic dye film:

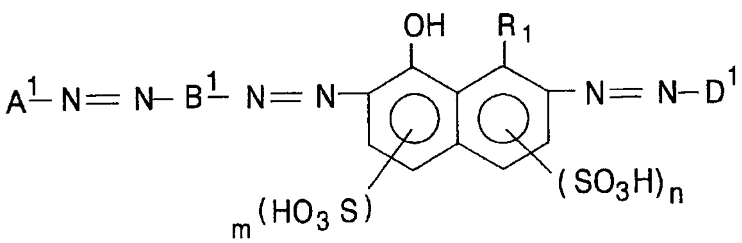

(1)

wherein $A^1$ is a phenyl group or aromatic heterocyclic group which may have a substituent, $B^1$ is an aromatic hydrocarbon group which may have a substituent, $D^1$ is an aromatic hydrocarbon group or aromatic heterocyclic group which may have a substituent, $R_1$ is a hydrogen atom, a hydroxyl group or an amino group which may have a substituent, and each of m and n is 0 or 1.

EP 1 832 628 A1

**Description**

TECHNICAL FIELD

The present invention relates to azo dyes useful for anisotropic dye films to be formed by a wet system film-forming method, anisotropic dye films using the dyes, and the like. Particularly, it relates to trisazo dyes showing high dichroism, which are useful for anisotropic dye films for e.g. polarizing plates provided on display devices such as light controlling devices, liquid crystal devices (LCD) and organic electroluminescence devices (OLED), and compositions for anisotropic dye films using the dyes, anisotropic dye films and polarizing elements.

BACKGROUND ART

In LCD, linear polarizing plates or circular polarizing plates are used to control optical rotation or birefringence in display. Also in OLED, circular polarizing plates are used to prevent reflection of external outside light. Heretofore, for such polarizing plates (polarizing elements), iodine has been widely used as a dichroic material. However, if iodine is used for a polarizing plate, its heat resistance or light fastness is inadequate since iodine is highly sublimable. Further, the extinction color becomes dark grayish blue, and an ideal achromatic color polarizing plate for the entire visible spectral region cannot necessarily be obtained.

Therefore, an anisotropic dye film as a polarizing film has been studied wherein an organic dye is used as a dichroic material which replaces iodine. However, such an organic dye has a problem such that only polarizing elements are obtainable which are substantially inferior in dichroism as compared with ones employing iodine.

Particularly, a polarizing element is an important constituent in LCD employing as the display principle optical rotation or birefringence of light, and a new polarizing element has been developed for the purpose of improving display performance and the like in recent years, as disclosed in Non-Patent Document 1.

As one method of forming an anisotropic dye film (polarizing element), a method may be mentioned wherein, in the same manner as in the case of a polarizing film containing iodine, an organic dye having dichroism (dichroic dye) is dissolved or adsorbed in a polymer material such as a polyvinyl alcohol, and the obtained film is stretched in one direction into a film so that the dichroic dye is oriented. However, this method had such a problem that time and effort are required for e.g. the stretching step.

Thus, other methods attract attention in recent years and as such methods, Non-Patent Documents 2 and 3 disclose a method of orientating a dichroic dye on a substrate such as glass or a transparent film utilizing e.g. intermolecular interaction of organic dye molecules. However, the methods disclosed in these documents have such problems that control of the operation conditions to orient the dichroic dye on the substrate, such as the temperature and the solvent removal rate, is complicated.

Further, the method of orienting a dichroic dye on a substrate such as glass or a transparent film utilizing e.g. intermolecular interaction of organic dye molecules to prepare an anisotropic dye film, may be a wet system film-forming method. In a case where an anisotropic dye film is prepared by the wet system film-forming method, the dye molecules to be used for the dye film are required not only to show high degree of polarization (dichroism) but also to be a dye suitable for the process for the wet system film-forming method. The wet system film-forming method is a process comprising a step of disposing a composition containing a dichroic dye and a liquid medium on a substrate and a step of removing the liquid medium and orienting the dye on the substrate, wherein operation conditions in each step are suitably controlled for orientation by e.g. the intermolecular interaction of dye molecules. Accordingly, as different from the above-described process of orienting the dye by a stretching treatment, the dye is required to have lyotropic liquid crystal properties by self-assembly. Thus, a dye to be used for a polarizing film prepared by means of the stretching treatment is not necessarily applicable to the wet system film-forming method.

Further, Patent Documents 1 to 3 propose materials suitable for the process of the wet system film-forming method. However, although such materials are suitable for the process, they have had such a drawback that they cannot show high dichroism.

Non-Patent Document 1: "Application of Functional Dyes", supervised by Masahiro Irie, CMC Publishing Co., Ltd., published on April 15, 1996, p. 96-106
Non-Patent Document 2: Dreyer, J.F., Phys. And Colloid Chem., 1948, 52, 808., "The Fixing of Molecular Orientation"
Non-Patent Document 3: Dreyer, J. F., Journal de Physique, 1969, 4, 114., "Light Polarization From Films of Lyotropic Nematic Liquid Crystals"
Patent Document 1: JP-A-2002-180052
Patent Document 2: JP-A-2002-528758
Patent Document 3: JP-A-2002-338838

DISCLOSURE OF THE INVENTION

OBJECTS TO BE ACCOMPLISHED BY THE INVENTION

It is an object of the present invention to provide a dye with which an anisotropic dye film which is black, and which has a high degree of polarization and a high degree of molecular orientation, is obtained by a wet system film-forming method, and a composition for an anisotropic dye film containing the dye. Further, it is also an object to provide an anisotropic dye film using the dye, which is black, and which has a high degree of polarization and a high degree of molecular orientation.

MEANS TO ACCOMPLISH THE OBJECTS

The present inventors have conducted extensive studies to accomplish the above objects and as a result, found that an anisotropic dye film formed by a wet system film-forming method by using a trisazo dye of which the free acid form is represented by the following formula (1), is black, has a high degree of polarization and a high degree of molecular orientation. The present invention has been accomplished on the basis of this discovery.
Namely, the present invention provides the following:

1. A trisazo dye for an anisotropic dye film to be formed by a wet system film-forming method, of which the free acid form is represented by the following formula (1) :

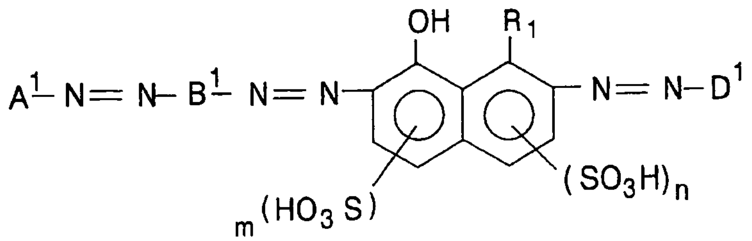
(1)

wherein $A^1$ is a phenyl group or aromatic heterocyclic group which may have a substituent, $B^1$ is an aromatic hydrocarbon group which may have a substituent, $D^1$ is an aromatic hydrocarbon group or aromatic heterocyclic group which may have a substituent, $R_1$ is a hydrogen atom, a hydroxyl group or an amino group which may have a substituent, and each of m and n is 0 or 1.
2. The trisazo dye according to the above 1, of which the free acid form is represented by the following formula (2):

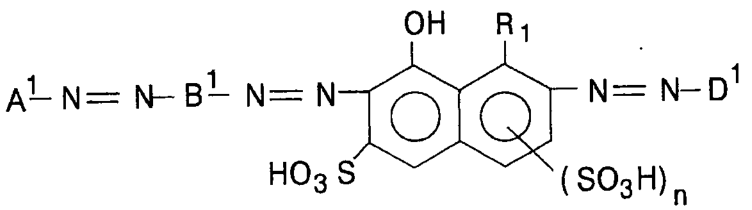
(2)

wherein $A^1$, $B^1$, $D^1$ and $R_1$ are as defined for the above formula (1), and n is 0 or 1.
3. The trisazo dye according to the above 1 or 2, wherein in the above formula (1) or (2), $R_1$ is a hydrogen atom.
4. The trisazo dye according to the above 1 or 2, wherein in the above formula (1) or (2), $A^1$ is a phenyl group which may have a substituent, $B^1$ is a phenylene group which may have a substituent or a naphthylene group which may have a substituent, and $D^1$ is a phenyl group which may have a substituent or a naphthyl group which may have a substituent.
5. A composition for an anisotropic dye film to be formed by a wet system film-forming method, which contains the trisazo dye as defined in any one of the above 1 to 4 and a solvent.
6. An anisotropic dye film formed by a wet system film-forming method by using the composition for an anisotropic

dye film as defined in the above 5.
7. An anisotropic dye film formed by a wet system film-forming method, which contains the trisazo dye as defined in any one of the above 1 to 4.
8. A polarizing element having the anisotropic dye film as defined in the above 6 or 7.

EFFECTS OF THE INVENTION

By using the trisazo dye of the present invention, an anisotropic dye film which shows low chromaticness (blackness), and which has a high degree of polarization and a high degree of molecular orientation can be provided even by a wet system film-forming method. Further, a polarizing element using such an anisotropic dye film is excellent in contrast. Further, the trisazo dye of the present invention is excellent in solubility.

BRIEF DESCRIPTION OF THE DRAWINGS

Fig. 1 shows the transmittance (Tz) of an anisotropic dye film in Example 1 for a polarized light in the absorption axis direction and the transmittance (Ty) for a polarized light in the polarization axis direction in the plane of the film.
Fig. 2 shows the degree of polarization (P%) of an anisotropic dye film in Example 1 at each wavelength.
Fig. 3 shows the transmittance (Tz) of an anisotropic dye film in Example 2 for a polarized light in the absorption axis direction and the transmittance (Ty) for a polarized light in the polarization axis direction in the plane of the film.
Fig. 4 shows the degree of polarization (P%) of an anisotropic dye film in Example 2 at each wavelength.
Fig. 5 is a C.I.E. chromaticity diagram illustrating the trail of the change in chromaticity of a dye aqueous solution in Example 3 at the respective concentrations.
Fig. 6 is a C.I.E. chromaticity diagram illustrating the trail of the change in chromaticity of a dye aqueous solution in Example 4 at the respective concentrations.
Fig. 7 is a C.I.E. chromaticity diagram illustrating the trail of the change in chromaticity of a dye aqueous solution in Comparative Example 1 at the respective concentrations.
Fig. 8 shows the transmittance (Tz) of an anisotropic dye film in Example 5 for a polarized light in the absorption axis direction and the transmittance (Ty) for a polarized light in the polarization axis direction in the plane of the film.
Fig. 9 shows the degree of polarization (P%) of an anisotropic dye film in Example 5 at each wavelength.
Fig. 10 is a C.I.E. chromaticity diagram illustrating the trail of the change in chromaticity of a dye aqueous solution in Example 6 at the respective concentrations.

BEST MODE FOR CARRYING OUT THE INVENTION

Now, constituting elements of the present invention will be described in detail below, but it should be understood that the following description of the constituting elements are merely exemplary (typical examples) of practical embodiments of the present invention, and the present invention is by no means thereby restricted.
The anisotropic dye film in the present invention is a dye film having anisotropy in an electromagnetic characteristic in optional two directions selected from a total of three directions in a three-dimensional coordinate system comprising the thickness direction of the dye film and mutually perpendicular optional two in-plane directions. The electromagnetic characteristic may, for example, be an optical characteristic such as absorption or refraction, or an electric characteristic such as resistance or capacitance. As a film having an optical anisotropy in e.g. absorption or refraction, a linearly polarizing film, a circularly polarizing film, a phase difference film or an anisotropic electroconductive film may, for example, be mentioned.
The present invention relates to a trisazo dye represented by the following formula (1), a composition for an anisotropic dye film containing the dye, an anisotropic dye film, and a polarizing element using the anisotropic dye film.
The dye of the present invention is a trisazo dye for an anisotropic dye film to be formed by a wet system film-forming method, of which the free acid form is represented by the following formula (1), and which has a basic skeleton having a trisazo structure in its molecular structure and having a 2,7-naphthylene group bonded to an azo group at the 7-position :

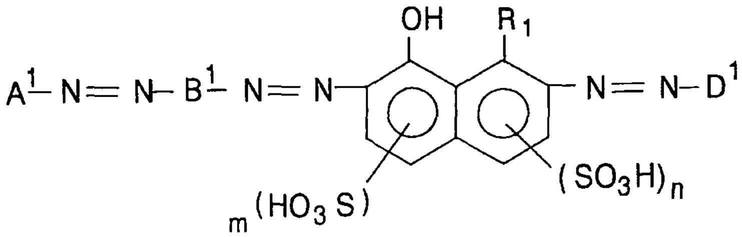

(1)

wherein $A^1$ is a phenyl group or aromatic heterocyclic group which may have a substituents, $B^1$ is an aromatic hydrocarbon group which may have a substituent, $D^1$ is an aromatic hydrocarbon group or aromatic heterocyclic group which may have a substituent, $R_1$ is a hydrogen atom, a hydroxyl group or an amino group which may have a substituent, and each of m and n is 0 or 1.
The dye represented by the above formula (1) is estimated to be as follows. Since it has a molecular structure in which an azo group is bonded to the 2,7-naphthylene group at the 7-position in the main skeleton, it provides a spectrum with secondary absorption and exhibits black color tone, and since it is a dye which is likely to show lyotropic liquid crystal properties by self-assembly, it has a high degree of polarization (dichroism). Particularly preferred is a trisazo dye represented by the following formula (2):

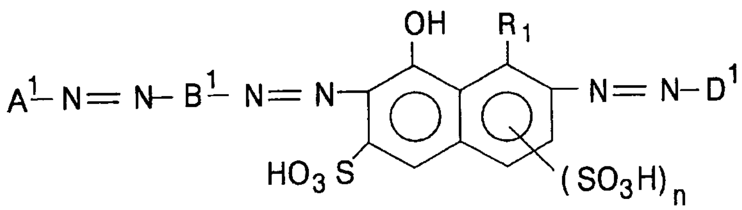

(2)

wherein $A^1$, $B^1$, $D^1$ and $R_1$ are as defined for the above formula (1), and n is 0 or 1.

Now, trisazo dyes represented by the above formulae (1) and (2) will be described.

For convenience in the following description, in the dyes represented by the above formulae (1) and (2), a naphthylene group bonded to azo groups at the 2- and 7-positions will be referred to as $C^1$.

The dye represented by the above formula (1) or (2) of the present invention is characterized by having a basic skeleton having a trisazo structure in its molecular structure and having an aromatic hydrocarbon group as $B^1$ and an aromatic hydrocarbon group or an aromatic heterocyclic group as $B^1$, and by having a naphthalene ring bonded to azo groups at the 2- and 7-positions as $C^1$. The dye of the present invention is estimated to show low chromaticness (blackness) and have a high degree of polarization and a high degree of molecular orientation by $C^1$ being a 1-hydroxy-2,7-naphthylene group and having a structure which may further have a sulfo group. Particularly, the above effects will further improve when $C^1$ is a 1-hydroxy-3-sulfo-2,7-naphthylene group as in the formula (2). Further, in the present invention, by forming an anisotropic dye film using the dye having such properties, an anisotropic dye film having a high degree of polarization and a high degree of molecular orientation can be obtained. Accordingly, the anisotropic dye film of the present invention is used preferably for a polarizing film, a phase difference film or an anisotropic electroconductive film, particularly preferably for a polarizing film.

($A^1$)

$A^1$ is a phenyl group which may have a substituent or an aromatic heterocyclic group which may have a substituent, and is particularly preferably a phenyl group.

In the present invention, "which may have a substituent" means "which may have at least one substituent".

The aromatic heterocyclic group is preferably an aromatic heterocyclic group having from about 6 to about 20 carbon atoms, and specifically it may, for example, be a pyridyl group or a quinolyl group, and it is preferably a nitrogen-containing monocyclic aromatic heterocyclic group such as a pyridyl group.

The substituent which the phenyl group and the aromatic heterocyclic group may have may, for example, be a group properly selected from an electron withdrawing group and an electron donative group to be introduced to adjust the chromaticness, or a hydrophilic group to be introduced to increase the solubility in a solvent.

Specifically, from the viewpoint of the solubility in a solvent and the chromaticness, the substituent which the phenyl group may have may, for example, be a sulfo group; a carboxyl group; a cyano group; a carbamoyl group which

may have a substituent such as a carbamoyl group or a N-methylcarbamoyl group; a sulfamoyl group which may have a substituent such as a sulfamoyl group or a N-methylsulfamoyl group; a nitro group; a halogen atom such as a fluorine atom, a chlorine atom, a bromine atom or an iodine atom; an amino group which may have a substituent such as a $C_{1-4}$ alkyl group or a $C_{2-18}$ acyl group, such as a N-methylamino group, a N,N-dimethylamino group, an acetylamino group or a benzoylamino group; a $C_{1-8}$ alkyl group which may have a substituent such as a methyl group, an ethyl group, a propyl group or a hydroxyethyl group, or an alkoxy group which may have a $C_{1-8}$ substituent such as a methoxy group, a 2-hydroxyethoxy group, a propoxy group or a butoxy group. Among them, preferred is a sulfo group, a carboxyl group, a cyano group, a carbamoyl group which may have a substituent, an acylamino group or an alkyl group. The phenyl group preferably has 1 to 3 substituents selected from these substituents, and the substituents may be the same or different.

The substituent which the aromatic heterocyclic group may have may, for example, be a sulfo group; a carboxyl group; a cyano group; a carbamoyl group which may have a substituent such as a carbamoyl group or a N-methylcarbamoyl group; a sulfamoyl group which may have a substituent such as a sulfamoyl group or a N-methylsulfamoyl group; a nitro group; a halogen atom such as a fluorine atom, a chlorine atom, a bromine atom or an iodine atom; an amino group which may have a substituent such as a $C_{1-4}$ alkyl group or a $C_{2-18}$ acyl group, such as a N-methylamino group, a N,N-dimethylamino group, an acetylamino group or a benzoylamino group; a $C_{1-8}$ alkyl group which may have a substituent such as a methyl group, an ethyl group, a propyl group, a hydroxyethyl group or a 2,3-dihydroxypropyl group, or an alkoxy group which may have a $C_{1-8}$ substituent such as a methoxy group, a 2-hydroxyethoxy group, a propoxy group or a butoxy group. Among them, preferred is a sulfo group, a carboxyl group or an alkyl group. The aromatic heterocyclic group may have 1 to 2 groups selected from such substituents. The substituents may be the same or different.

($B^1$)

$B^1$ is an aromatic hydrocarbon group which may have a substituent. The aromatic hydrocarbon group may be an aromatic hydrocarbon group having from about 6 to about 20 carbon atoms, and is preferably a phenylene group or a naphthylene group. Particularly, the phenylene group is preferably a 1,4-phenylene group, and the naphthylene group is preferably a 1,4-naphthylene group.

The substituent which the aromatic hydrocarbon group as $B^1$ may have may, for example, be a group properly selected from an electron withdrawing group and an electron donative group to be introduced to adjust the chromaticity, or a hydrophilic group to be introduced to increase the solubility in a solvent. Specifically, from the viewpoint of the solubility in a solvent and the chromaticity, it may, for example, be a sulfo group, a carboxyl group, a hydroxyl group, a halogen atom, a cyano group, a carbamoyl group which may have a substituent, a sulfamoyl group which may have a substituent, an amino group which may have a substituent, an alkyl group which may have a substituent, or an alkoxy group which may have a substituent. The aromatic hydrocarbon group as $B^1$ preferably has from 1 to 3 substituents selected from these substituents, and the substituents may be the same or different.

Specifically, the halogen atom, the carbamoyl group, the sulfamoyl group, the amino group, the alkyl group or the alkoxy group as the substituent which the aromatic hydrocarbon group may have, may, for example, be a halogen atom such as a fluorine atom, a chlorine atom, a bromine atom or an iodine atom; a carbamoyl group which may have a substituent such as a carbamoyl group or a N-methylcarbamoyl group; a sulfamoyl group such as a sulfamoyl group or a N-methylsulfamoyl group; an amino group; a usually $C_{1-18}$, preferably $C_{1-8}$ alkylamino group such as a N-methylamino group, a N,N-dimethylamino group or a N,N-diethylamino group; a usually $C_{6-18}$, preferably $C_{6-10}$ arylamino group such as a N-phenylamino group or a N-naphthylamino group; a usually $C_{2-18}$, preferably $C_{2-11}$ acylamino group such as an acetylamino group or a benzoylamino group; a usually $C_{1-18}$, preferably $C_{1-12}$ alkyl group such as a methyl group, an ethyl group, a n-propyl group, an i-propyl group, a n-butyl group or a n-dodecyl group; or a usually $C_{1-18}$, preferably $C_{1-12}$ alkoxy group such as a methoxy group, an ethoxy group, an i-propoxy group, a n-butoxy group or a n-dodecyloxy group.

Each of the above amino group, alkyl group and alkoxy group may further have a substituent, and the substituent may, for example, be a hydroxyl group, an alkoxy group or a carboxyl group.

Particularly when $B^1$ is a phenylene group, the substituent which the phenylene group may have is, from the viewpoint of the solubility in a solvent and the chromaticity, preferably a sulfo group, a carboxyl group, a halogen atom, a cyano group, a carbamoyl group which may have a substituent, an amino group which may have a substituent, an alkyl group which may have a substituent, or an alkoxy group which may have a substituent, particularly preferably a sulfo group, a carboxyl group, an acylamino group or an alkyl group. As specific substituents, the same substituents as described above may be mentioned. The phenylene group preferably has from 1 to 3, more preferably from 1 to 2 substituents selected from these substituents.

Further, when $B^1$ is a naphthylene group, the substituent which the naphthylene group may have may, for example, be preferably a sulfo group, a carboxyl group or a hydroxyl group, and a particularly preferred substituent is a sulfo group. The naphthylene group may have usually 1 to 2 substituents.

($D^1$)

$D^1$ is an aromatic hydrocarbon group or aromatic heterocyclic group which may have a substituent. The aromatic hydrocarbon group may be an aromatic hydrocarbon group having from about 6 to about 20 carbon atoms, and is preferably a phenyl group or a naphthyl group, particularly preferably a phenyl group.

The aromatic heterocyclic group is preferably an aromatic heterocyclic group having from about 6 to about 20 carbon atoms, and specifically, it may, for example, be a pyridyl group, a quinolyl group or a pyrazolonyl group, and it is preferably a nitrogen-containing monocyclic aromatic heterocyclic group such as a pyridyl group.

The substituent which the aromatic hydrocarbon group as $D^1$ may have is the same as the substituent as described for the above $B^1$. The substituents which the aromatic hydrocarbon group as $D^1$ may have is preferably a sulfo group, a carboxyl group, a hydroxyl group, a halogen atom, a cyano group, a carbamoyl group which may have a substituent, a sulfamoyl group which may have a substituent, an amino group which may have a substituent, an alkyl group which may have a substituent, or an alkoxy group which may have a substituent, particularly preferably a sulfo group, a carboxyl group, a hydroxyl group, an amino group which may have a substituent such as a carboxyethylamino group, or an alkoxy group. The number of substituent is from 1 to 3, preferably from 2 to 3.

The substituent which the aromatic heterocyclic group may have may be the same substituents as described for the above $A^1$, and among them, preferred is an amino group, a sulfo group, a carboxyl group or an alkyl group. The aromatic heterocyclic group may have 1 or 2 groups selected from these substituents.

($C^1$ (naphthylene group bonded to azo groups at the 2-and 7-positions))

The substituent $R_1$ which $C^1$ has is a hydrogen atom, a hydroxyl group or an amino group which may have a substituent. The substituent which the amino group may have may be preferably a $C_{1-4}$ alkyl group (such as a methyl group or an ethyl group) or a $C_{2-7}$ acyl group (such as an acetyl group or a benzoyl group), and $R_1$ is more preferably a hydrogen atom.

Each of m and n represents the number of the sulfo group and is 0 or 1. Such a sulfo group is preferably bonded to at least the 6-position of the naphthalene ring.

The molecular weight of the trisazo dye represented by the above formula (1) of the present invention is usually at least 500 and at most 2,500, preferably at most 1,500 in the free acid form. If the molecular weight is too high exceeding the upper limit, the solubility may decrease. If it is too low below the lower limit, the chromaticity tends to be hypsochromic. Further, the dye represented by the above formula (1) is usually water soluble, and usually shows dichroism. Among dyes of the present invention, one showing lyotropic liquid crystal properties in a solution is particularly preferred to obtain a dye film showing high anisotropy.

Further, the dye of the present invention and a composition for an anisotropic dye film containing the dye can provide a high degree of molecular orientation state by means of a process characteristic of the wet system film-forming method i.e. a lamination process by e.g. coating on the surface of a substrate. This means that it is possible to form a dye film with high anisotropy by using the dye of the present invention by a wet system film-forming method.

The dye to be used in the present invention may be used in its free acid form as represented by the above formula (1), or some of acidic groups may take a salt form. Further, a dye in a salt form and a dye in a free acid form may be present as mixed. Further, when it is obtained in a salt form at the time of its production, it may be used as it is or may be converted to a desired salt form. As a method for conversion to a salt form, a known method may optionally be employed. For example, the following methods may be mentioned.

(1) A method wherein a strong acid such as hydrochloric acid is added to an aqueous solution of a dye obtained in a salt form, to let the dye precipitate in the form of a free acid, and then the acidic groups of the dye are neutralized with an alkali solution having a desired counter ion (such as a lithium hydroxide aqueous solution) for conversion to a salt.

(2) A method wherein a large excess amount of a neutral salt having a desired counter ion (such as lithium chloride) is added to an aqueous solution of a dye obtained in a salt form for conversion to a salt in the form of a salted out cake.

(3) A method wherein an aqueous solution of a dye obtained in a salt form is treated with a strongly acidic cation exchange resin to let the dye precipitate in the form of a free acid, and then the acidic groups of the dye are neutralized with an alkali solution having a desired counter ion (such as a lithium hydroxide aqueous solution) for conversion to a salt.

(4) A method wherein an aqueous solution of a dye obtained in a salt form is treated with a strongly acidic cation exchange resin preliminarily treated with an alkali solution having a desired counter ion (such as a lithium hydroxide aqueous solution), for conversion to a salt.

Further, with respect to the dye to be used in the present invention, whether the acidic group is in a free acid

form or a salt form depends on the pKa of the dye and the pH of the aqueous dye solution.

The salt form may, for example, be a salt of an alkali metal such as Na, Li or K, a salt of ammonium which may be substituted by an alkyl group or a hydroxyalkyl group, or a salt of an organic amine. The organic amine may, for example, be a lower alkyl amine such as a $C_{1-6}$ lower alkylamine, a hydroxy-substituted $C_{1-6}$ lower alkylamine or a carboxy-substituted $C_{1-6}$ lower alkylamine. In the case of such a salt form, the type is not limited to one type, and a plural types may be present.

(Excitation Purity)

The dye of the present invention represented by the formula (1) is a dye particularly useful for an anisotropic dye film to be formed by a wet system film-forming method and is usually black, and it is particularly preferably a dye having an excitation purity of from 0% to 25% for an anisotropic dye film. Namely, by use of a dye having an excitation purity of from 0% to 25%, optical properties more excellent in the balance among the degree of orientation of the dye molecules, the transition moment and the absorption wavelength range will be exhibited.

In the present invention, the dye preferably has an excitation purity of at least 0% and at most 25%, more preferably at most 20%, most preferably at most 12%. Further, the anisotropic dye film also has an excitation purity of preferably at least 0% and at most 25%, more preferably at most 20%, most preferably at most 12%.

Here, the excitation purity is obtained in such a manner that the chromaticity coordinates N of standard illuminant and the chromaticity coordinates C of the obtained dye in the chromaticity diagram are connected with a straight line, and the wavelength corresponding to the intersection point of the extension of the straight line and the spectrum locus is taken as the dominant wavelength, and the excitation purity is calculated from the proportion at the respective points. The chromaticity coordinate C can be obtained in such a manner that the dye is added to water to obtain a dye aqueous solution, the visible light transmittance of the aqueous solution is measured by a spectrophotometer, and the chromaticities x and y in the CIE 1964 supplementary standard colorimetric system under standard illuminant $D_{65}$ are calculated.

The excitation purity of the dye in the present invention means one measured and calculated with respect to the dye aqueous solution obtained by adding the dye to water, and the excitation purity of the anisotropic dye film means one measured and calculated with respect to a film formed by applying a composition for an anisotropic dye film described hereinafter in detail to a substrate.

Further, the calculation method may be in accordance with a known method as disclosed in e.g. "New Color Science Handbook" edited by THE COLOR SCIENCE ASSOCIATION OF JAPAN (UNIVERSITY OF TOKYO PRESS, published on November 25, 1989 (second edition)), pages 104 to 105.

As specific examples of the dye represented by the formula (1) of the present invention in the free acid form, dyes having structures represented by the following formulae (1-1) to (1-20) may be mentioned. However, the dye of the present invention is not limited thereto:

(1-1)

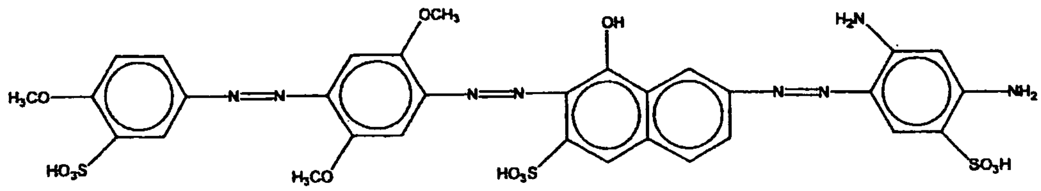

(1-2)

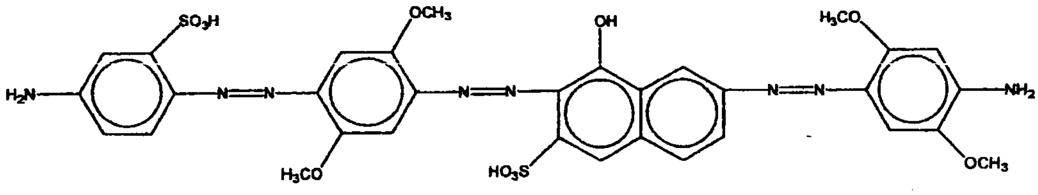

(1－3)

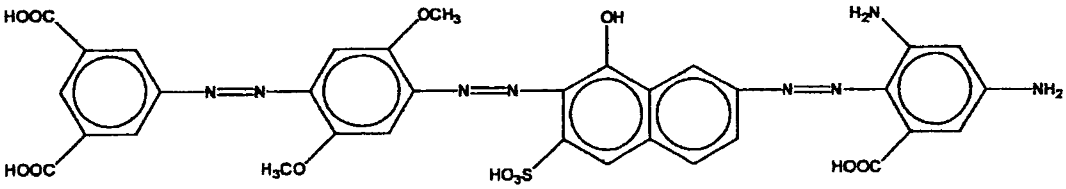

(1－4)

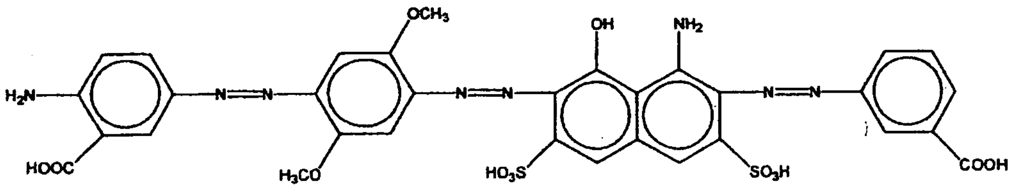

(1－5)

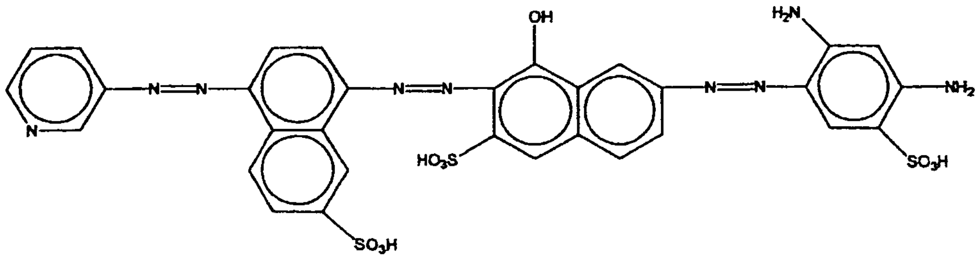

(1－6)

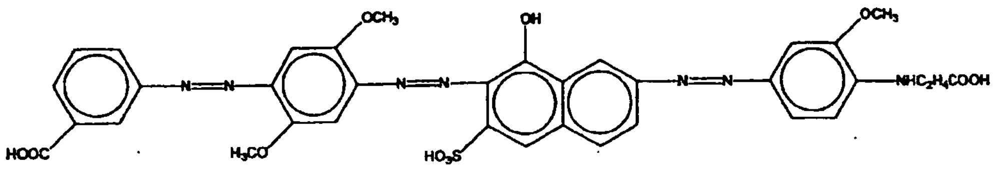

(1－7)

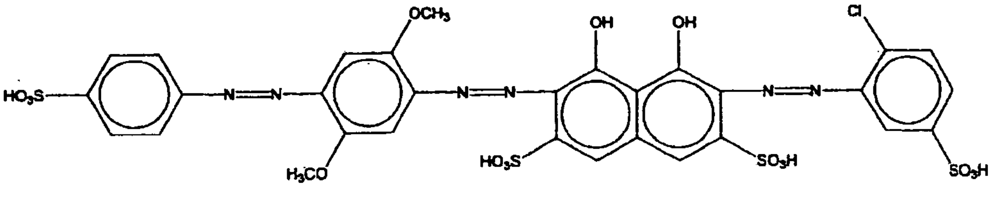

(1－8)

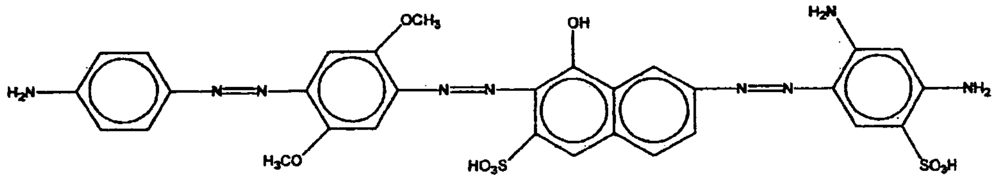

(1－9)

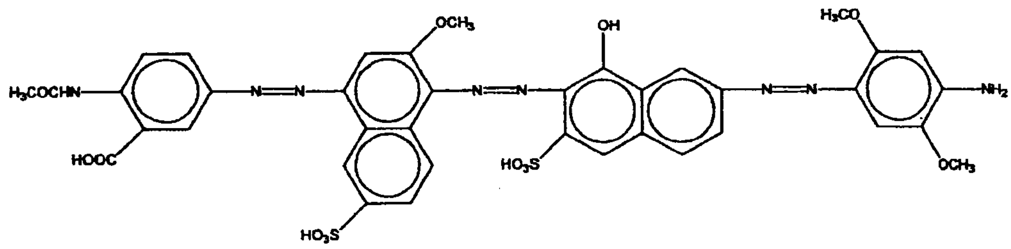

(1－10)

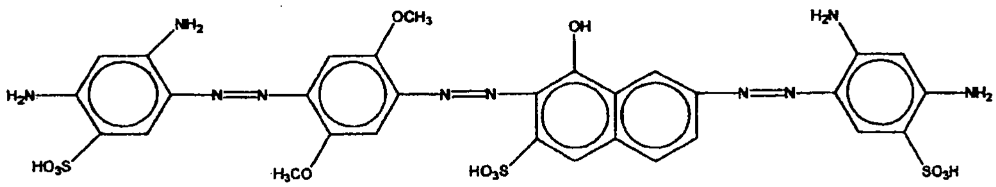

(1－11)

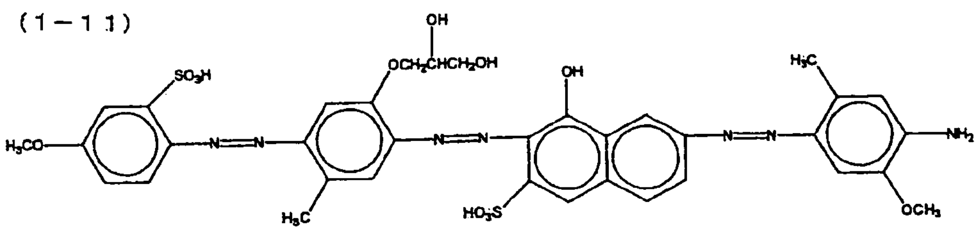

(1-12)

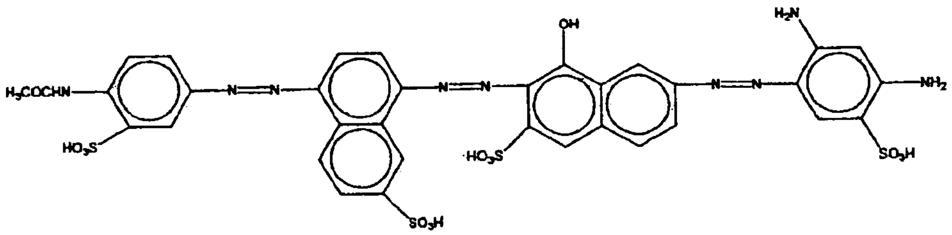

(1-13)

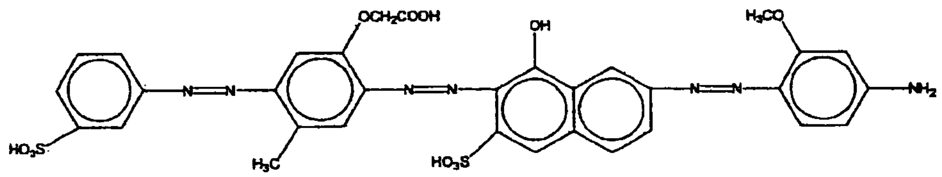

(1-14)

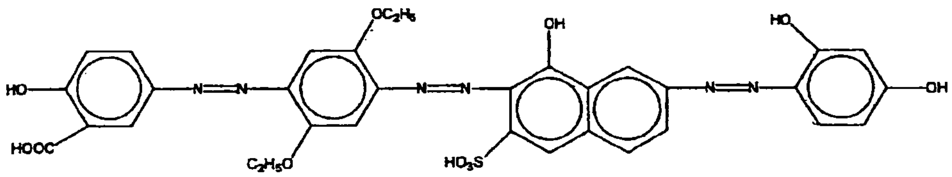

(1-15)

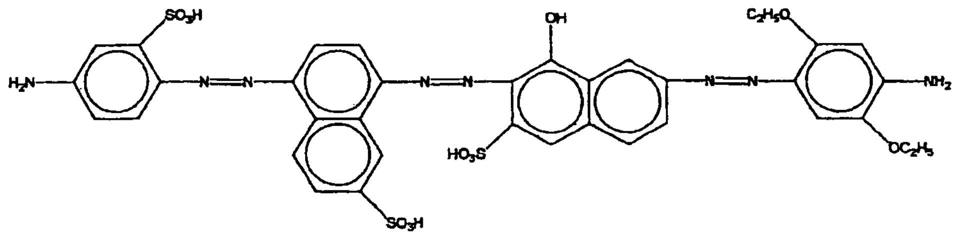

(1-16)

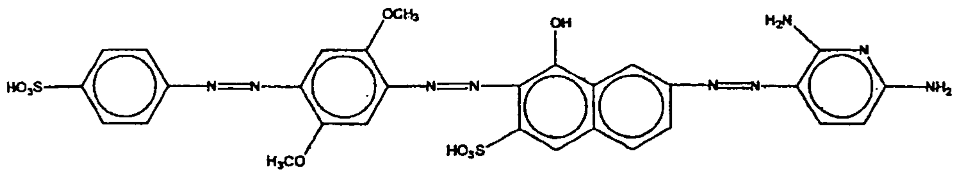

(1-17)

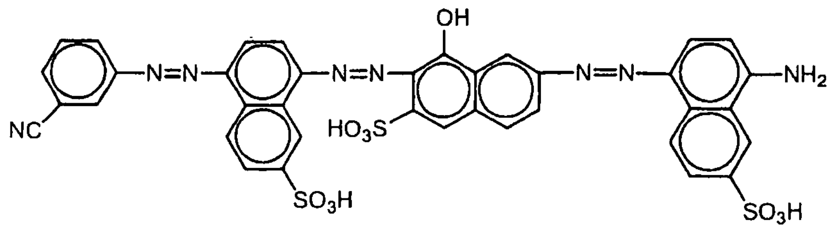

(1-18)

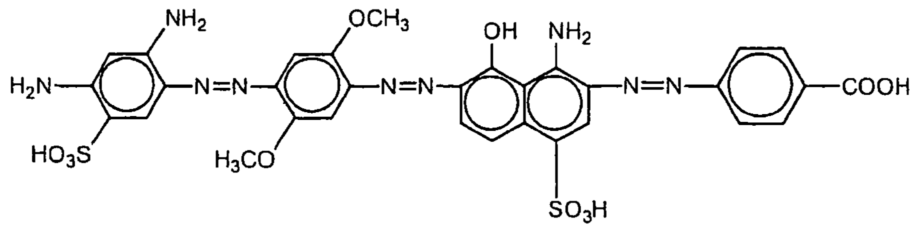

(1-19)

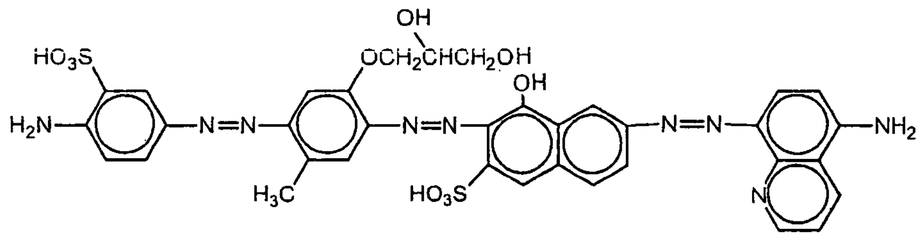

(1-20)

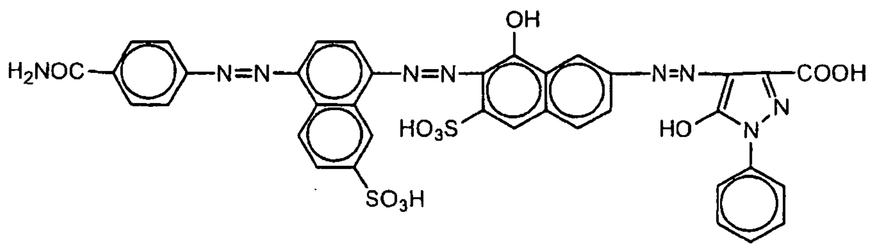

The trisazo dyes represented by the above formula (1) can be produced in accordance with a conventional method. For example, the dye No. (1-1) can be produced by the following steps (A) to (D).

Step (A): From p-anisidine-3-sulfonic acid and 2,5-dimethoxyaniline, a monoazo compound is produced by means of diazotization and coupling steps in accordance with a common method (e.g. "New Dye Chemistry" edited by Yutaka Hosoda, published by GIHODO SHUPPAN Co., Ltd. on December 21, 1973, p. 396-409).

Step (B): The monoazo compound obtained in Step (A) is likewise diazotized by a common method, followed by a coupling reaction with 2-amino-8-hydroxynaphthalene-6-sulfonic acid to obtain a disazo compound.

Step (C): The disazo compound obtained in Step (B) is likewise diazotized by a common method, followed by a coupling reaction by 1,3-diaminobenzene-4-sulfonic acid to obtain a trisazo compound.

Step (D): After completion of the reaction, salting out with sodium chloride is carried out to obtained the desired dye No. (1-1). The dye may further be purified as the case requires.

The dye represented by the formula (1) of the present invention is a dye for an anisotropic dye film to be formed by a wet system film-forming method. Particularly, the dye represented by the above structural formula No. (1-1), which forms lyotropic liquid crystals in an aqueous solution, is capable of forming an anisotropic dye film showing high dichroism and is thereby particularly useful.

The composition for an anisotropic dye film of the present invention contains at least the dye represented by

the above formula (1) and a solvent. Hereinafter, dyes represented by the above formula (1) will be comprehensively referred to as the dye of the present invention.

The dye of the present invention may be used alone in the composition for an anisotropic dye film, or a plurality of the dyes or a mixture with another dye to the extent of not decreasing the orientation, may be used, whereby anisotropic dye films having various chromaticnesses can be produced. Further, in the dye composition for an anisotropic dye film of the present invention, in addition to a solvent described hereinafter, an additive such as a surfactant may be blended if necessary.

Another dye for blending may, for example, be preferably C.I. Direct Yellow 12, C.I. Direct Yellow 34, C.I. Direct Yellow 86, C.I. Direct Yellow 142, C.I. Direct Yellow 132, C.I. Acid Yellow 25, C.I. Direct Orange 39, C.I. Direct Orange 72, C.I. Direct Orange 79, C.I. Acid Orange 28, C.I. Direct Red 39, C.I. Direct Red 79, C.I. Direct Red 81, C.I. Direct Red 83, C.I. Direct Red 89, C.I. Acid Red 37, C.I. Direct Violet 9, C.I. Direct Violet 35, C.I. Direct Violet 48, C.I. Direct Violet 57, C.I. Direct Blue 1, C.I. Direct Blue 67, C.I. Direct Blue 83, C.I. Direct Blue 90. C.I. Direct Green 42, C.I. Direct Green 51 or C.I. Direct Green 59. As the solvent to be used for the composition for an anisotropic dye film of the present invention, water, a water-miscible organic solvent or a mixture thereof is suitable. Specifically, the organic solvent may, for example, be an alcohol such as methyl alcohol, ethyl alcohol or isopropyl alcohol, a glycol such as ethylene glycol or diethylene glycol or a cellosolve such as methyl cellosolve or ethyl cellosolve. They may be used alone or as a solvent mixture of two or more of them.

In a case where the dye of the present invention is dissolved or dispersed in a solvent, the concentration depends on the solubility of the dye and the concentration of formation of an association state such as a lyotropic liquid crystalline state, and it is preferably at least 0.1 wt%, more preferably at least 0.5 wt%, and preferably at most 30 wt%, more preferably at most 20 wt%.

In a case where the composition for anisotropic dye film is applied as e.g. a dye solution to a substrate, in order to improve wettability and the coating properties on the substrate, an additive such as a surfactant may be added as the case requires. As the surfactant, any of anionic, cationic and nonionic surfactants may be used. The addition concentration is usually preferably at least 0.05 wt% and at most 0.5 wt%.

The anisotropic dye film according to the present invention is an anisotropic dye film formed by using the composition for an anisotropic dye film or an anisotropic dye film containing the dye for an anisotropic dye film of the present invention. As mentioned above, the trisazo dye represented by the formula (1) of the present invention, which has a specific dye structure, forms a highly lyotropic liquid crystalline state, provides a high degree of molecular orientation state and shows high dichroism. Accordingly, the anisotropic dye film of the present invention is a useful dye film showing a high degree of polarization (dichroism).

The anisotropic dye film of the present invention has a high degree of polarization, and the anisotropic dye film is preferably one having a degree of polarization of at least 85%, more preferably at least 90%, particularly preferably at least 95%.

The anisotropic dye film of the present invention is prepared by a wet system film-forming method. As the wet system film-forming method in the present invention, usually a known method may be mentioned, such as a method of preparing a composition containing a dichroic dye by using a dichroic dye (the dye of the present invention), a solvent and an additive as the case requires, applying the composition to a substrate such as a glass plate and orienting the dye, followed by lamination.

The wet system film-forming method may, for example, be coating systems as disclosed in "Coating Systems", Yuji Harasaki (Maki Shoten, published on October 30, 1979, pages 3 (Tables 1 and 2) and 6 to 154) or a known method as disclosed in "Creation and Applications of Harmonized Molecular Materials" supervised by Kunihiro Ichimura (CMC Publishing Co., Ltd., published on March 3, 1998, pages 118 to 149). Specifically, a method of coating a substrate preliminarily subjected to an orientation treatment by spin coating, spray coating, bar coating, roll coating or blade coating may be mentioned.

At the time of coating the substrate with the composition for an anisotropic dye film, the temperature is preferably at least 0°C and at most 80°C, and the humidity is preferably at least about 10%RH and at most about 80%RH. At the time of drying, the temperature is preferably at least 0°C and at most 120°C, and the humidity is preferably at least about 10%RH and at most about 80%RH.

In a case where the anisotropic dye film is to be formed on a substrate by e.g. the above method, the film thickness after drying is usually preferably at least 50 nm, more preferably at least 100 nm and preferably at most 50 μm, more preferably at most 1 μm.

As the substrate to be used for formation of the anisotropic dye film of the present invention, glass, or a film of e.g. triacetate, an acrylic resin, a polyester, triacetyl cellulose or an urethane polymer may, for example, be mentioned. Further, on the surface of such a substrate, an orientation treatment layer may be applied by a known method as disclosed in e.g. "Ekisho Binran (Liquid Crystal Handbook)" (Maruzen Company, Limited, published on October 30, 2000, pages 226 to 239) in order to control the orientation direction of the dichroic dye.

The anisotropic dye film of the dichroic dye (the dye of the present invention) formed by coating by the above

method usually has low mechanical strength, and thus a protective layer is provided if necessary. The protective layer is formed by lamination of a transparent polymer film such as a triacetate, acrylic resin, polyester, polyimide, triacetyl cellulose or urethane polymer film, and then subjected to practical use.

Further, in a case where the anisotropic dye film of the present invention is used as e.g. a polarizing filter for various display devices such as LCD or OLED, the anisotropic dye film may be formed directly on e.g. an electrode substrate constituting such a display device, or a substrate having the dye film formed thereon may be used as a constituting component of such a display device.

The anisotropic dye film of the present invention will function as a polarizing film whereby a linearly polarized light, circularly polarized light or oval polarized light can be obtained by utilizing the anisotropy in light absorption and further is capable of providing functions as various anisotropic films such as refractive anisotropy and conductivity anisotropy by selecting the film-forming process by the wet system film-forming method and the substrate or the composition for an anisotropic dye film containing the dye, whereby it can be made various types of polarizing elements which can be used for various purposes.

The polarizing element of the present invention is one employing the above-described anisotropic dye film of the present invention. It may be either a polarizing element comprising the anisotropic dye film alone or a polarizing element having the anisotropic dye film formed on a substrate. The polarizing element having the anisotropic dye film formed on a substrate will be called a polarizing element including the substrate.

In a case where the anisotropic dye film of the present invention is formed on a substrate and used as a polarizing element, the formed anisotropic dye film itself may be used, or not only the above-mentioned protective layer but also layers having various functions such as an adhesive layer and a reflection-preventing layer, an oriented film, and layers having optical functions such as a function as a phase difference film, a function as a brightness-improved film, a function as a reflective film, a function as a semi-transmissive reflective film and a function as a diffusion film may be formed by lamination by e.g. a wet system film-forming method, so that it may be used in the form of a laminate.

Such layers having optical functions may be formed, for example, by the following methods.

A layer having a function as a phase difference film may be formed by applying a stretching treatment as disclosed in e.g. Japanese Patent No. 2841377 or Japanese Patent No. 3094113, or by applying a treatment as disclosed in e.g. Japanese Patent No. 3168850.

Further, a layer having a function as a brightness-improved film may be formed by forming ultrafine pores by a method as disclosed in e.g. JP-A-2002-169025 or JP-A-2003-29030, or by superposing two or more cholesteric liquid crystal layers with different central wavelengths of the selective reflection.

A layer having a function as a reflective film or a semi-transmissive reflective film may be formed by using a metal thin film obtained by deposition or sputtering.

A layer having a function as a diffusion film may be formed by coating the above protective layer with a resin solution containing fine particles.

Further, a layer having a function as a phase difference film or an optical compensation film may be formed by applying a liquid crystalline compound such as a discotic liquid crystalline compound or a nematic liquid crystalline compound and orienting it.

The anisotropic dye film using the dye according to the present invention can be formed directly on a highly heat resistant substrate such as glass, whereby a highly heat resistant polarizing element can be obtained. Thus, it is useful not only for a liquid crystal display and an organic EL display but also for applications for which high heat resistance is required, such as a liquid crystal projector and an on-vehicle display panel.

EXAMPLES

Now, the present invention will be described in further detail with reference to Examples. However, it should be understood that the present invention is by no means restricted to such specific Examples within a range not to exceed the scope of the present invention.

In the following Examples, the degree of polarization was obtained by measuring the transmittance of an anisotropic dye film by a spectrophotometer having an iodine type polarizing element disposed in an incident optical system, followed by calculation in accordance with the following formula:

$$\text{Degree of polarization (P\%)} = \{(Ty - Tz)/(Ty + Tz)\} \times 100$$

Tz: transmittance of a dye film for a polarized light in the absorption axis direction
Ty: transmittance of a dye film for a polarized light in the polarization axis direction

EXAMPLE 1

10 parts of sodium salt of the above dye No. (1-1) was added to 90 parts of water, stirred and dissolved, followed by filtration to obtain a dye aqueous solution (composition for an anisotropic dye film).

On the other hand, as a substrate, a glass substrate having a polyimide oriented film formed thereon by silk printing (75 mm × 25 mm, thickness 1.1 mm, the polyimide oriented film with a polyimide film thickness of about 800 Å preliminarily subjected to rubbing treatment with cotton cloth) was prepared. The above dye aqueous solution was applied on the substrate by a spin coater (SC-200 manufactured by Oshigane) (2,500 rpm for 15 seconds) and air dried to obtain an anisotropic dye film in which the dye was oriented in the rubbing direction.

The transmittance (Tz) of the obtained anisotropic dye film for a polarized light having a plane of vibration in the absorption axis direction in the plane of the dye film and the transmittance (Ty) for a polarized light having a plane of vibration in the polarization axis direction in the plane of the dye film were measured and shown in Fig. 1. Further, the degree of polarization (P%) at each wavelength is shown in Fig. 2. The dye film of the present invention had a high degree of polarization (light absorption anisotropy) of at least 80% at a wide range of from about 500 nm to about 650 nm and had a degree of polarization of at least 90% in the vicinity of the maximum absorption wavelength of from 550 nm to 600 nm. Thus, this film is estimated to be a film having a high degree of molecular orientation.

EXAMPLE 2

10 parts of lithium salt of the above dye No. (1-15) and 0.2 part of a nonionic surfactant (Emulgen 109P, manufactured by Kao Corporation) were added to 90 parts of water, stirred and dissolved, followed by filtration to obtain a dye aqueous solution (composition for an anisotropic dye film). The composition was applied to the same substrate subjected to orientation treatment as one used in Example 1 with a bar coater No. 3 (manufactured by TESTER SANGYO CO., LTD.) and air dried to obtain an anisotropic dye film. The transmittance (Tz) of the obtained anisotropic dye film for a polarized light having a plane of vibration in the absorption axis direction and the transmittance (Ty) for a polarized light having a plane of vibration in the polarization axis direction in the plane of the dye film were measured and shown in Fig. 3. Further, the degree of polarization (P%) at each wavelength is shown in Fig. 4. The dye film of the present invention had a substantially constant degree of polarization (light absorption anisotropy) in a wide wavelength region of from about 400 nm to about 700 nm. Thus, the film is estimated to be a film having a high degree of molecular orientation.

EXAMPLE 3

The dye aqueous solution prepared in Example 1 was injected into a quartz cuvette having an optical path length of 0.01 mm and the transmittance in the visible wavelength region was measured by a spectrophotometer (U-3500, manufactured by Hitachi, Ltd.), and then the transmission chromaticity under standard illuminant $D_{65}$ was measured by methods stipulated in JIS Z8701-1995 (CIE No. 15.2) and JIS Z8722-1994. Further, the dye aqueous solution was diluted with distilled water so that the dye concentrations (weight ratio) were 1,000 ppm and 10 ppm, and the aqueous solution at a concentration of 1,000 ppm and the aqueous solution at a concentration of 10 ppm were injected into quartz cuvettes having optical path lengths of 0.1 mm and 10 mm, respectively, to determine the transmission chromaticity by the same methods. The trail of the change in chromaticity at the respective concentrations is shown in the C.I.E. chromaticity diagram in Fig. 5. With respect to the dye of the present invention, the trail of the chromaticity of the aqueous solution at the respective dye concentrations passed near the chromaticity (w) of standard illuminant $D_{65}$, and the excitation purity (pe) at a concentration of 10% was 17%, and thus the dye of the present invention showed low chromaticness suitable for a polarizing plate.

EXAMPLE 4

Using the dye aqueous solution prepared in Example 2, an aqueous solution was prepared in the same manner as in Example 3, the transmittance in the visible wavelength region was measured, and then the chromaticity was determined. The trail of the change in chromaticity at the respective concentrations is shown in the C.I.E. chromaticity diagram in Fig. 6. With respect to the dye of the present invention, the trail of the chromaticity of the aqueous solution at the respective concentrations passed near the chromaticity (w) of standard illuminant $D_{65}$, and the excitation purity (pe) at a concentration of 10% was 22%, and thus the dye of the present invention showed low chromaticness suitable for a polarizing plate.

COMPARATIVE EXAMPLE 1

The same operation as in Example 1 was conducted except that sodium salt of a dye having the following

structure was used instead of the dye No. (1-1) to prepare a composition for a dye film, but the dye had poor solubility and was not completely dissolved. Thus, a composition was prepared again to have a dye concentration of 5 wt%, and dye aqueous solutions having dye concentrations of 5 wt%, 1,000 ppm and 10 ppm were prepared in the same manner as in Example 3 to calculate the chromaticities.

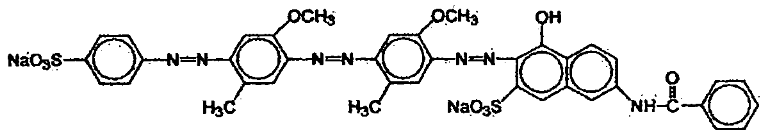

The trail of the change in chromaticity at the respective concentrations is shown in the C.I.E. chromaticity diagram in Fig. 7. With respect to the dye of this Comparative Example, the trail of the chromaticity did not pass near the chromaticity (w) of standard illuminant $D_{65}$, but was located in the chromatic region of purple to blue, and the excitation purity (pe) at 5% was 72%. Thus, the dye of this Comparative Example is inferior to the dye of the present invention in view of achromatic properties.

EXAMPLE 5

10 parts of sodium salt of the above dye No. (1-17) and 0.2 part of a nonionic surfactant (Emulgen 109P manufactured by Kao Corporation) were added to 90 parts of water, stirred and dissolved, followed by filtration to obtain a dye aqueous solution (composition for an anisotropic dye film). The composition was applied to a slide glass (manufactured by MATSUNAMI GLASS IND. LTD., model S-1111) with a four-sided applicator with a gap of 30 μm (manufactured by Imoto Machinery Co., Ltd.) and air dried to obtain an anisotropic dye film. The transmittance (Tz) of the obtained anisotropic dye film for a polarized light having a plane of vibration in the absorption axis direction and the transmittance (Ty) for a polarized light having a plane of vibration in the polarization axis direction in the plane of the dye film were measured and shown in Fig. 8. Further, the degree of polarization (P%) at each wavelength is shown in Fig. 9. The dye film of the present invention had a substantially constant degree of polarization (light absorption anisotropy) in a wide region of from about 400 nm to about 700 nm. Thus, the film is estimated to be a film having a high degree of molecular orientation.

EXAMPLE 6

Using the dye aqueous solution prepared in Example 5, an aqueous solution was prepared in the same manner as in Example 3, and the transmittance in the visible wavelength region was measured and then the chromaticity was obtained.

The trail of the change in chromaticity at the respective concentrations is shown in the C.I.E. chromaticity diagram in Fig. 10. With respect to the dye of the present invention, the trail of the chromaticity of the aqueous solution at the respective concentrations passed near the chromaticity (w) of standard illuminant $D_{65}$, and the excitation purity (pe) at a concentration of 10% was 22%, and thus the dye of the present invention showed low chromaticness suitable for a polarizing plate.

INDUSTRIAL APPLICABILITY

A trisazo dye capable of forming an anisotropic dye film showing high dichroism and having a high degree of molecular orientation (order parameter) and showing low chromaticness (blackness) can be provided. It can be utilized for e.g. a polarizing plate provided on display devices such as light control devices, liquid crystal devices and organic electroluminescence devices.

The entire disclosures of Japanese Patent Application No. 2004-376880 filed on December 27, 2004 and Japanese Patent Application No. 2005-352910 filed on December 7, 2005 including specifications, claims, drawings and summaries are incorporated herein by reference in their entireties.

## Claims

1. A trisazo dye for an anisotropic dye film to be formed by a wet system film-forming method, of which the free acid

form is represented by the following formula (1) :

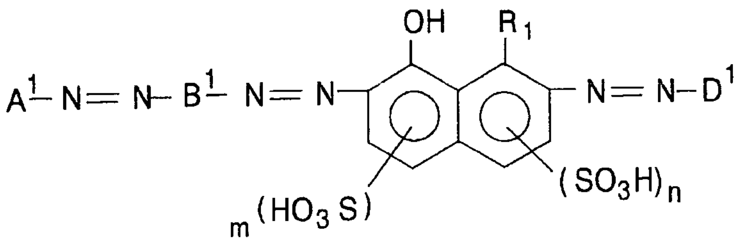

(1)

wherein $A^1$ is a phenyl group or aromatic heterocyclic group which may have a substituent, $B^1$ is an aromatic hydrocarbon group which may have a substituent, $D^1$ is an aromatic hydrocarbon group or aromatic heterocyclic group which may have a substituent, $R_1$ is a hydrogen atom, a hydroxyl group or an amino group which may have a substituent, and each of m and n is 0 or 1.

**2.** The trisazo dye according to Claim 1, of which the free acid form is represented by the following formula (2) :

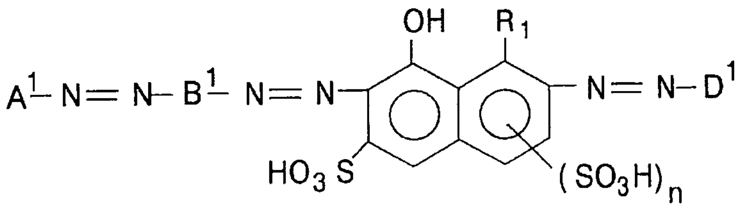

(2)

wherein $A^1$, $B^1$, $D^1$ and $R_1$ are as defined for the above formula (1), and n is 0 or 1.

**3.** The trisazo dye according to Claim 1 or 2, wherein in the above formula (1) or (2), $R_1$ is a hydrogen atom.

**4.** The trisazo dye according to Claim 1 or 2, wherein in the above formula (1) or (2), $A^1$ is a phenyl group which may have a substituent, $B^1$ is a phenylene group which may have a substituent or a naphthylene group which may have a substituent, and $D^1$ is a phenyl group which may have a substituent or a naphthyl group which may have a substituent.

**5.** A composition for an anisotropic dye film to be formed by a wet system film-forming method, which contains the trisazo dye as defined in any one of Claims 1 to 4 and a solvent.

**6.** An anisotropic dye film formed by a wet system film-forming method by using the composition for an anisotropic dye film as defined in Claim 5.

**7.** An anisotropic dye film formed by a wet system film-forming method, which contains the trisazo dye as defined in any one of Claims 1 to 4.

**8.** A polarizing element having the anisotropic dye film as defined in Claim 6 or 7.

Fig. 1

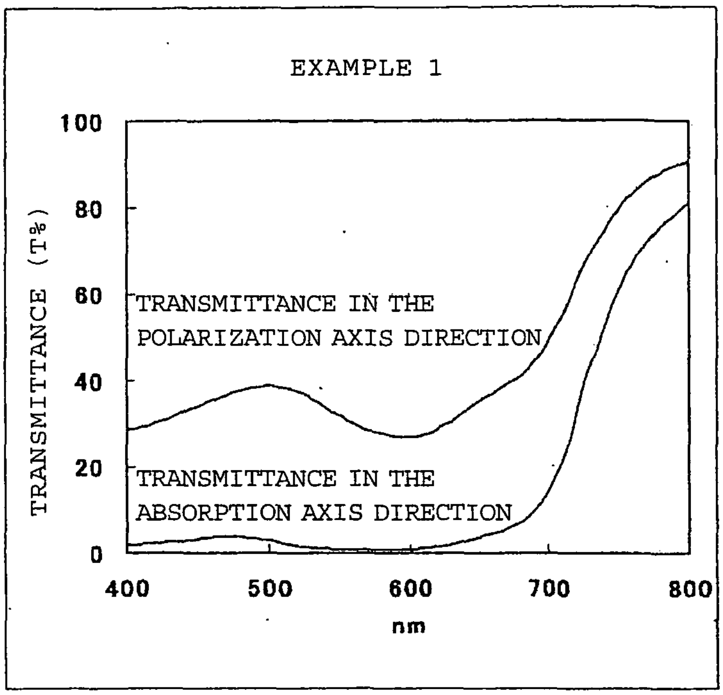
EXAMPLE 1
TRANSMITTANCE (T%)
100
80
60
40
20
0
TRANSMITTANCE IN THE POLARIZATION AXIS DIRECTION
TRANSMITTANCE IN THE ABSORPTION AXIS DIRECTION
400
500
600
700
800
nm

Fig. 2

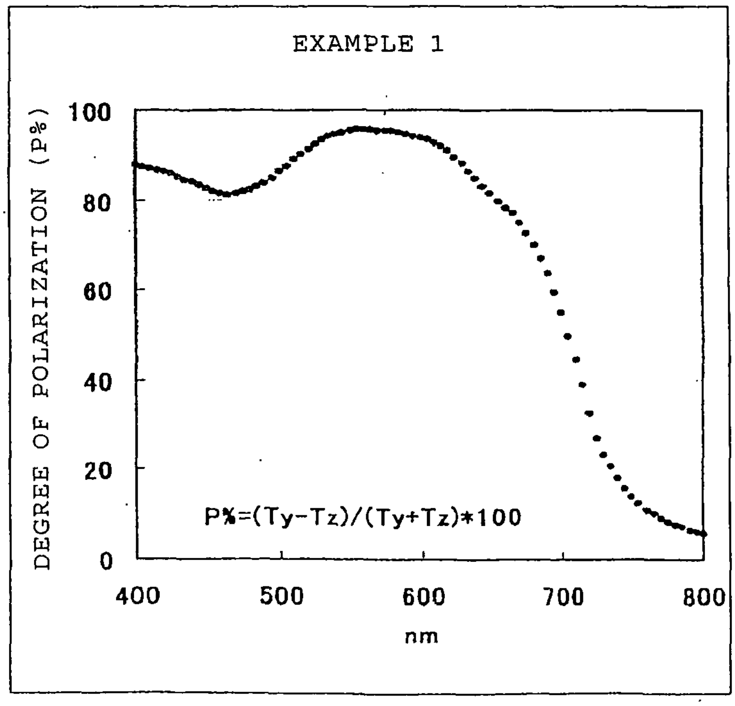
EXAMPLE 1
DEGREE OF POLARIZATION (P%)
100
80
60
40
20
0
P%=(Ty-Tz)/(Ty+Tz)*100
400
500
600
700
800
nm

Fig. 3

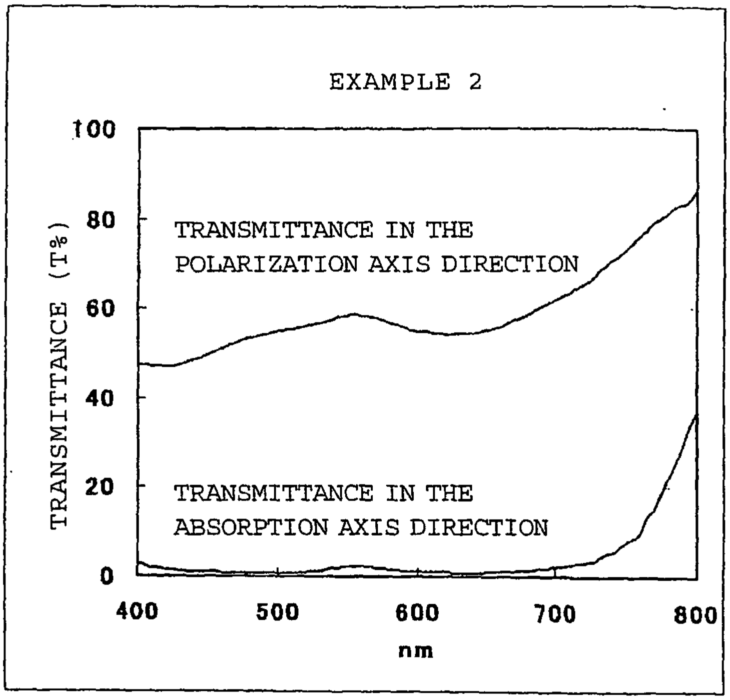
EXAMPLE 2
TRANSMITTANCE (T%)
100
80
60
40
20
0
TRANSMITTANCE IN THE
POLARIZATION AXIS DIRECTION
TRANSMITTANCE IN THE
ABSORPTION AXIS DIRECTION
400
500
600
700
800
nm

Fig. 4

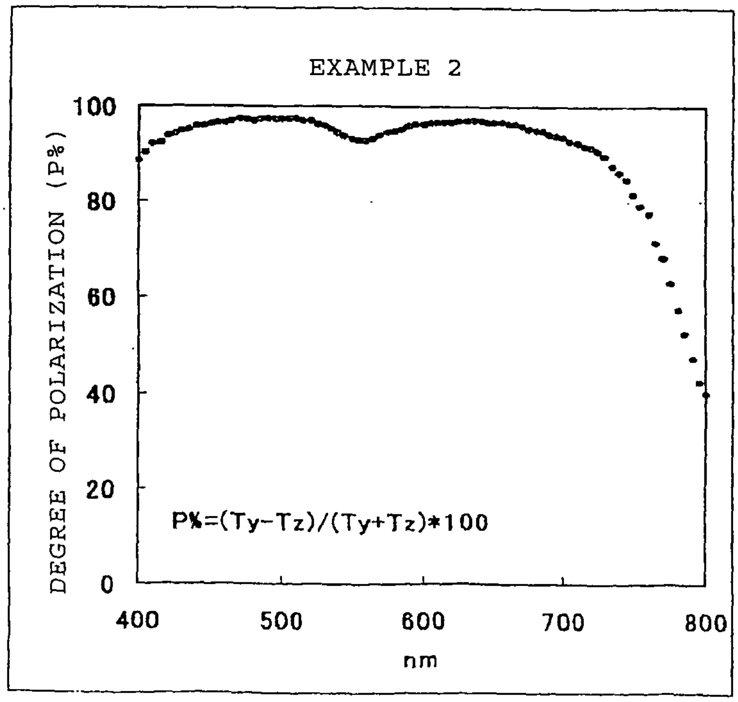
EXAMPLE 2
DEGREE OF POLARIZATION (P%)
100
80
60
40
20
0
P%=(Ty-Tz)/(Ty+Tz)*100
400
500
600
700
800
nm

Fig. 5

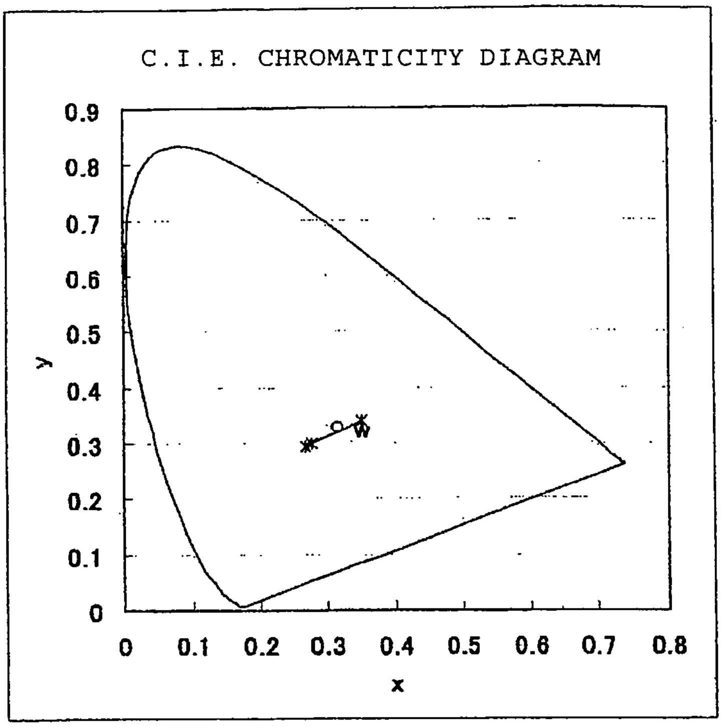
C.I.E. CHROMATICITY DIAGRAM
y
x
W
0
0.1
0.2
0.3
0.4
0.5
0.6
0.7
0.8
0.9

Fig. 6

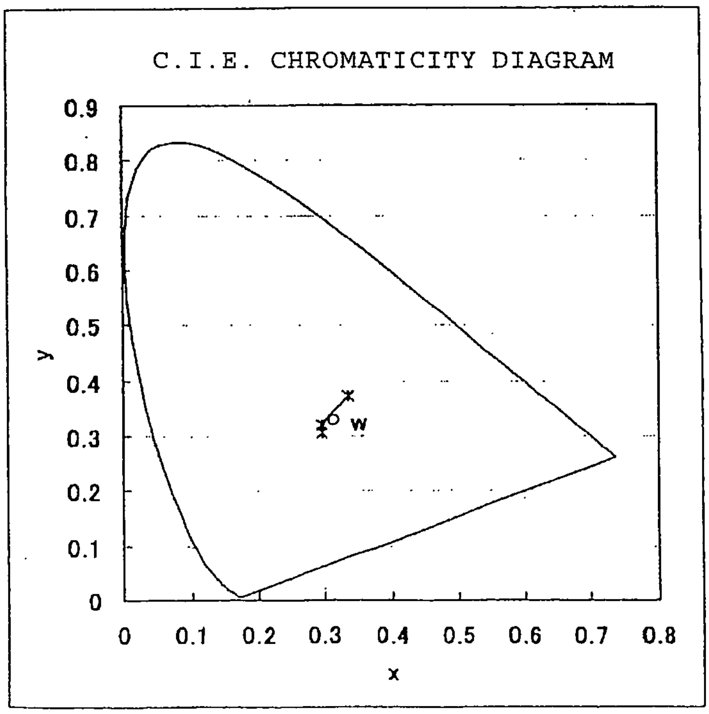
C.I.E. CHROMATICITY DIAGRAM
y
x
W
0
0.1
0.2
0.3
0.4
0.5
0.6
0.7
0.8
0.9

Fig. 7

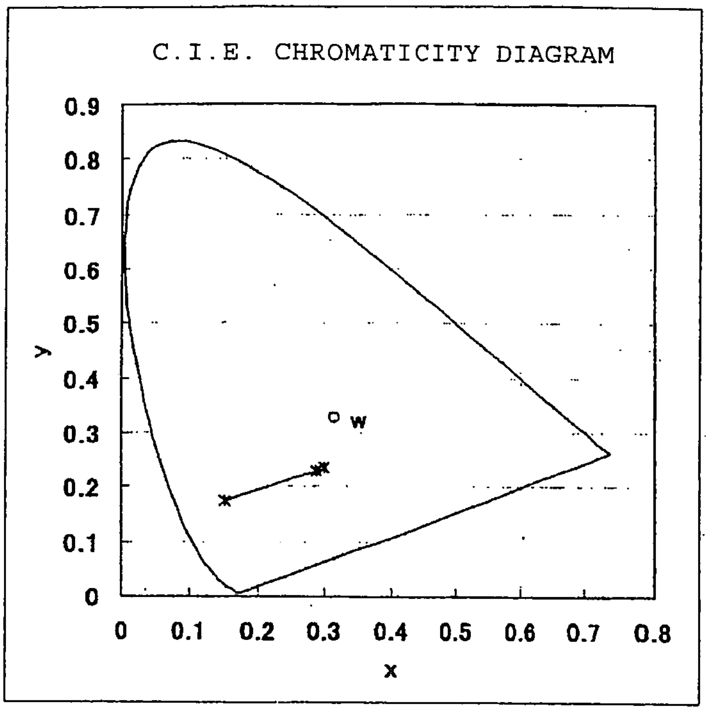
C.I.E. CHROMATICITY DIAGRAM
0.9
0.8
0.7
0.6
0.5
0.4
0.3
0.2
0.1
0
y
W
0
0.1
0.2
0.3
0.4
0.5
0.6
0.7
0.8
x

Fig. 8

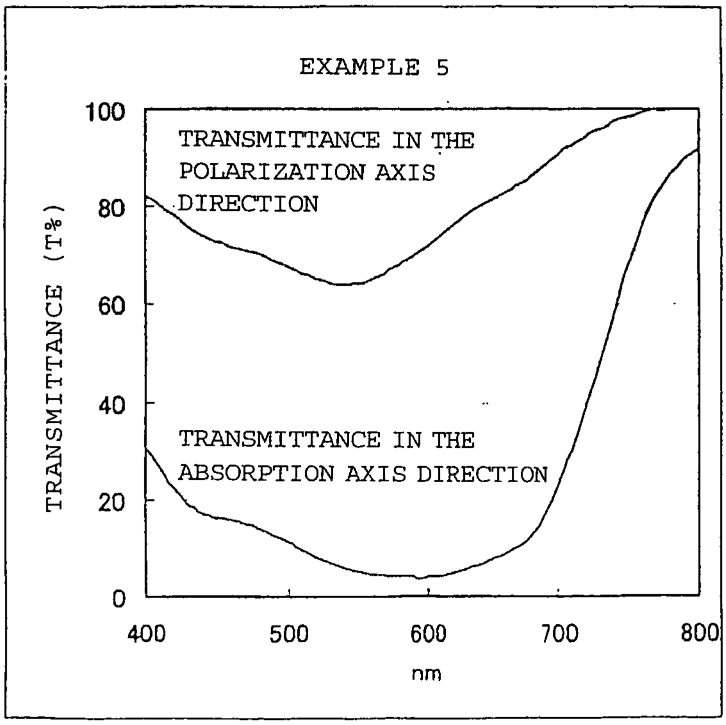
EXAMPLE 5
100
80
60
40
20
0
TRANSMITTANCE (T%)
TRANSMITTANCE IN THE POLARIZATION AXIS DIRECTION
TRANSMITTANCE IN THE ABSORPTION AXIS DIRECTION
400
500
600
700
800
nm

Fig. 9

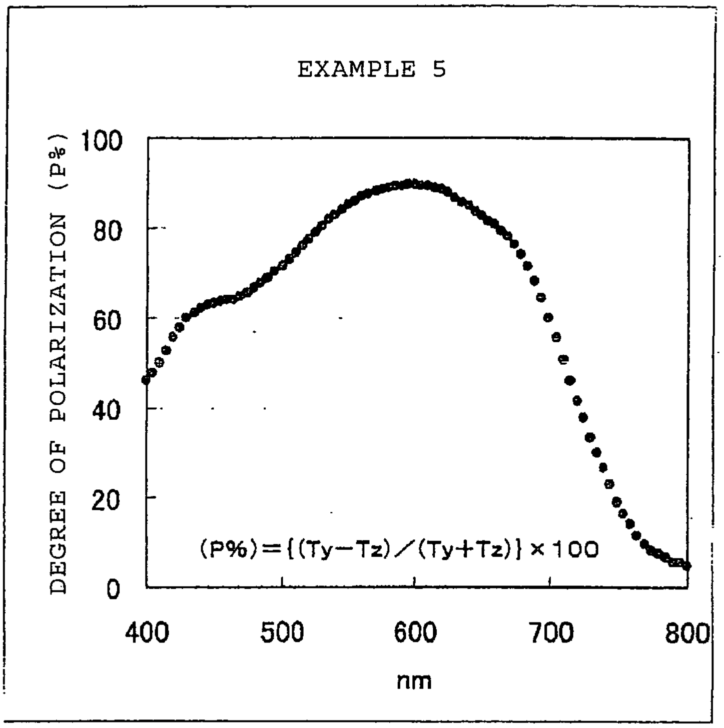
EXAMPLE 5
DEGREE OF POLARIZATION (P%)
100
80
60
40
20
0
(P%)={(Ty−Tz)/(Ty+Tz)}×100
400
500
600
700
800
nm

Fig. 10

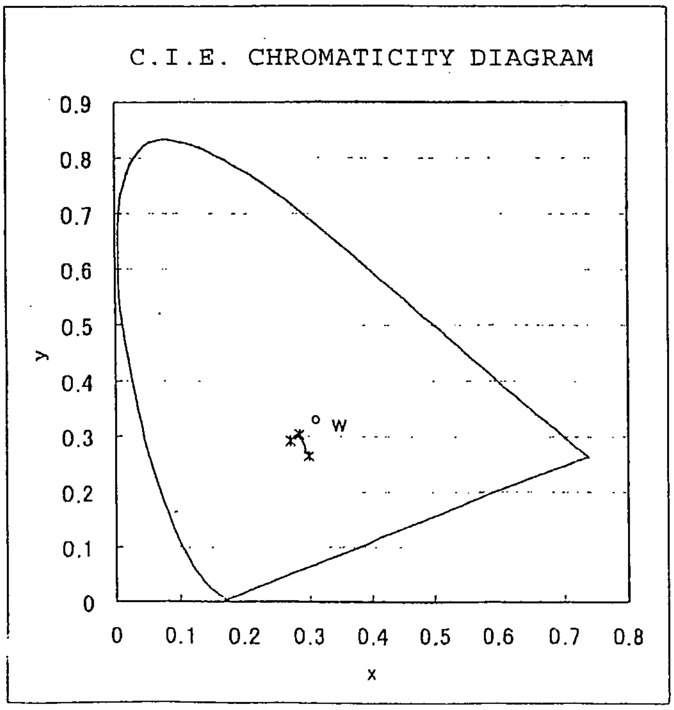
C.I.E. CHROMATICITY DIAGRAM
0.9
0.8
0.7
0.6
0.5
0.4
0.3
0.2
0.1
0
y
W
0
0.1
0.2
0.3
0.4
0.5
0.6
0.7
0.8
x

**INTERNATIONAL SEARCH REPORT**

International application No.
PCT/JP2005/023932

A. CLASSIFICATION OF SUBJECT MATTER
*C09B31/18*(2006.01), *G02B5/30*(2006.01), *C09K19/60*(2006.01)

According to International Patent Classification (IPC) or to both national classification and IPC

B. FIELDS SEARCHED

Minimum documentation searched (classification system followed by classification symbols)
C09B31/18, C09K19/60, G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 1-93703 A (Mitsubishi Kasei Corp.), 12 April, 1989 (12.04.89), Claims; table 3; examples (Family: none) | 1-8 |
| Y | JP 1-167703 A (Mitsubishi Kasei Corp.), 03 July, 1989 (03.07.89), Claims; table 1 (No.3) (Family: none) | 1-8 |
| Y | JP 2002-155218 A (Sumitomo Chemical Co., Ltd.), 28 May, 2002 (28.05.02), Claims; Par. No. [0020]; examples (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 March, 2006 (06.03.06) | 14 March, 2006 (14.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/023932

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2-309302 A (Nippon Kayaku Co., Ltd.), 25 December, 1990 (25.12.90), Claims; page 4, upper right column; examples (Family: none) | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002180052 A
- JP 2002528758 A
- JP 2002338838 A
- JP 2841377 B
- JP 3094113 B
- JP 3168850 B
- JP 2002169025 A
- JP 2003029030 A
- JP 2004376880 A
- JP 2005352910 A


### Non-patent literature cited in the description


- Application of Functional Dyes. **MASAHIRO IRIE.** Application of Functional Dyes. CMC Publishing Co., Ltd, 15 April 1996, 96-106
- **DREYER, J.F.** The Fixing of Molecular Orientation. *Phys. And Colloid Chem.,* 1948, vol. 52, 808
- **DREYER, J. F.** Light Polarization From Films of Lyotropic Nematic Liquid Crystals. *Journal de Physique,* 1969, vol. 4, 114
- New Color Science Handbook. SCIENCE ASSOCIATION OF JAPAN. UNIVERSITY OF TOKYO PRESS, 25 November 1989, 104-105
- **YUTAKA HOSODA.** New Dye Chemistry. GIHODO SHUPPAN Co., Ltd, 21 December 1973, 396-409
- **YUJI HARASAKI.** Coating Systems. Maki Shoten, 30 October 1979, 3
- **KUNIHIRO ICHIMURA.** Creation and Applications of Harmonized Molecular Materials. CMC Publishing Co., Ltd, 03 March 1998, 118-149
- **EKISHO BINRAN.** Liquid Crystal Handbook. Maruzen Company, Limited, 30 October 2000, 226-239